# FASCICULE DE BREVET EUROPEEN

(11) **EP 0 324 293 B1**
(45) Date de publication et mention de la délivrance du brevet: **12.05.1993**
(21) Numéro de dépôt: 88403237.6
(22) Date de dépôt: 19.12.1988
(51) Int. Cl.: C08L 97/02, B27N 1/02, C08G 12/36

(54) **Procédé de fabrication de panneaux de particules à l'aide de résines aminoplastes**
Verfahren zur Herstellung von Spanplatten mit Aminoplastharzen
Process for the fabrication of particle boards with aminoplast resins

(30) Priorité: 23.12.1987 FR 8718001
(43) Date de publication de la demande: 19.07.1989
(73) Titulaire: ELF ATOCHEM S.A., 92800 Puteaux (FR)
(72) Inventeur: Barthomieux, Jeanine, F-31120 Pinsaguel (FR); Garrigue, Roger, F-31000 Toulouse (FR); Lalo, Jack, F-31400 Toulouse (FR)
(74) Mandataire: Rochet, Michel

(56) Documents cités:
- EP-A- 0 107 260
- FR-A- 962 875
- CHEMICAL ABSTRACTS vol.74, no 2. 11.01.1971, page 23,abrégé no. 4199; & JPA-7027835(Nissan Chemicals Industries), 11.09.1970.

## Description

La présente invention concerne un procédé de fabrication de résines aminoplastes, elle a plus particulièrement pour objet un procédé de fabrication d'aminoplastes qui permet de fabriquer des panneaux agglomérés présentant des émanations de formol réduites et possédant des propriétés mécaniques améliorées.

Les panneaux agglomérés sont habituellement fabriqués par pressage à chaud d'une masse de copeaux de bois ou d'une autre matière cellulosique en mélange avec des liants en particulier de solutions de résines urée-formol ou mélamine-urée-formol. Les températures de pressage sont généralement d'environ 150 à 220 °C afin d'obtenir une bonne adhésion des copeaux pour un délai de fabrication acceptable mettant en oeuvre des pressions élevées jusqu'à 70 bars.

Le principal inconvénient des résines aminoplastes est de provoquer des émanations élevées de formol libre. On a essayé de réduire le taux de formol libre en mettant au point divers procédés de fabrication : malheureusement lorsque l'on veut atteindre des taux de formol particulièrement bas, l'expérience montre que cet objectif s'accompagne d'une dégradation des propriétés mécaniques des panneaux finis. On a aussi proposé pour supprimer le formol libre l'utilisation des résines dépourvues de formol en particulier les résines à base de solutions d'isocyanates. Malheureusement le problème du formol est remplacé par celui des isocyanates dont l'action sur l'homme est plus néfaste et plus durable que ne l'est le formol puisqu'on à mis en évidence la présence de groupes isocyanates libres dans des panneaux même après plusieurs années de fabrication. De plus la mise en oeuvre de telles résines sur les presses posent de sérieux problèmes de démoulage à cause de l'affinité des isocyanates pour les parties métalliques. Il a été aussi proposé de mettre en oeuvre des procédés consistant à pulvériser séparémént les deux liants sur les copeaux : leur mise en oeuvre est délicate à cause du faible taux d'isocyanate qu'il est économiquement possible d'utiliser.

Le besoin se fait donc sentir de mettre au point des résines aminoplastes présentant des taux de formol réduits et dont l'utilisation conduit à des panneaux finis dégageant peu de formol et présentant de bonnes caractéristiques mécaniques.

La présente invention concerne un procédé de fabrication de résines aminoplastes caractérisé en ce que on ajoute à la résine aminoplastes du ureïdo - 2 diamino - 4,6 triazine 1, 3, 5 et éventuellement de la mélamine.

Selon une autre caractéristique du procédé de l'invention la quantité de ureïdo 2 diamino - 4,6 triazine 1, 3, 5 est ajoutée à raison de 0,1 à 10 % en poids par rapport au poids de la solution de résine, la quantité de mélamine éventuellement ajoutée étant égale au plus à 10 % en poids par rapport au poids de la solution de résine.

On a trouvé que la mise en oeuvre d'un tel procédé dans le fabrication des résines aminoplastes en particulier dans la fabrication des résines aminoplastes utilisées comme colles à bois, permet de fabriquer des panneaux de particules ou de contreplaqué présentant des émanations de formol réduites ainsi que des propriétés mécaniques améliorées. Selon l'invention le ureïdo - 2 diamino 4,6 triazine 1, 3, 5 peut être ajouté seul à la résine aminoplaste en quantité comprise entre 0,1 et 10 % par rapport au poids de la solution de résine aminoplaste. Selon une autre caractéristique du procédé de l'invention il est aussi possible d'associer de la mélamine en quantité au plus égale à 10 % en poids par rapport au poids de la solution de résine : on observe dans ce cas un effet de synergie qui se traduit à la fois par une réduction dans les émanations de formol libre et par une amélioration accrue des caractéristiques mécaniques des panneaux finis.

Le procédé de la présente demande peut être mis en oeuvre selon diverses techniques. Selon une première caractéristique du procédé de l'invention on additionne à la résine aminoplaste au moment de l'application le ureïdo - 2 diamino - 4,6 triazine 1, 3, 5 sous forme de préférence d'un solution dans le formol. Selon une seconde caractéristique du procédé de l'invention le ureïdo 2 diamino 4,6 triazine 1, 3, 5 est additionné pendant la synthèse de la résine aminoplaste, la quantité utilisée étant identique à la quantité d'urée substituée à fonctions NH₂ équivalents. Selon une troisième caractéristique du procédé de l'invention lorsque on utilise le ureïdo - 2 diamino - 4,6 triazine 1, 3, 5 conjointement avec la mélamine, les deux additifs sont ajoutés pendant la syntèse de la résine aminoplaste. A titre d'exemple dans le cas d'une résine urée-formol en tant que résine aminoplaste, le procédé comporte une première étape dans laquelle on réalise d'abord l'addition d'urée de formol et de la mélamine à pH voisin de la neutralité (pH compris entre 6, 5 et 9) à température de reflux, dans une seconde étape on poursuit la condensation à pH voisin de 5,5 et dans une troisième étape on ajoute l'ureïdo - 2 diamino 4,6 triazine - 1, 3, 5 dissout dans un précondensat urée-formol à une température de 70 °C. à pH voisin de 8,5 puis on ajoute de l'urée de manière à atteindre le rapport molaire 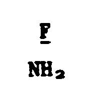
de la résine finale. Il est aussi possible d'ajouter les deux réactifs séparément, c'est-à-dire l'un pendant la synthèse, l'autre après la synthèse de la résine aminoplaste. Quelque soit le mode opératoire utilisé les quantités de réactifs mises en oeuvre pour obtenir les résines aminoplastes correspondent aux quantités des résines connues à savoir un rapport molaire 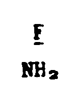
compris entre 0,42 à 1.

Les résines aminoplastes utilisées pour la mise en oeuvre du procédé de l'invention sont fabriquées selon des techniques connues. Dans le cas de résines urée-formol, elles sont préparées par condensation de formol et d'urée à pH compris entre 4 et 7 à une température voisine de l'ébullition : de préférence cette réaction de condensation est réalisée en plusieurs étapes. Le ureïdo 2 diamino 4,6 triazine 1, 3, 5 utilisé pour la mise en oeuvre du procédé de l'invention peut être de façon connue, être obtenu par réaction du chloro - 2 diamino 4,6 sur du sodium urée ou par réaction de la mélamine et du cyanate de potassium en milieu chlohydrique, ou encore par réaction de la mélamine et de l'urée dans l'orthocrésol. De préférence on le prépare par le procédé décrit dans une demande de brevet déposé par la Demanderesse et intitulé : "Nouveau procédé de préparation de dérivés uréïdo-aminés triaziniques" : Demande française publie sous le n^{o} 2625198. Selon ce procédé on fait réagir de l'urée et de la mélamine en tous rapports molaires dans le diméthylformamide.

Les exemples suivants illustrent la présentation invention. Toutes les quantités sont exprimées en parties en poids.

### Exemple 1

On utilise de l'ureïdo 2 diamino 4,6 triazine 1, 3, 5 préparé selon le procédé de la Demanderesse décrit dans la demande de brevet intitulée : "Nouveau procédé de préparation de dérivées uréo-aminés triaziniques".

100 parties en poids de ureïdo - 2 diamino - 4, 6 triazine -1, 3, 5 sont mis en solution dans 285 parties en poids d'une solution de formol à 37 %. Le mélange réactionnel est chauffé à 90 °C à pH maintenu à 7 à l'aide de 1 % en poids par rapport à l'ensemble des réactifs d'un mélange tampon constitué de Na H₂ PO₄ + Na ₂HPO₄. Après refroidissement le mélange prend en masse : il est ensuite filtré, lavé à l'eau et à l'acétone.

5 parties en poids de l'ureïdo - 2 diamino - 4, 6 ureïdo triazine 1, 3, 5 ainsi formulées sont ajoutées à 100 parties en poids d'une résine urée-formol présentant un rapport molaire 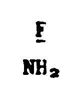
de 0,53. On fabrique des panneaux avec la résine obtenue. Le tableau 1 résume les propriétés des panneaux obtenues.

### Exemple 2

On prépare une résine de façon classique contenant 5 % ureïdo - 2 diamino - 4,6 triazine 1, 3, 5.

On fabrique trois présentant un rapport final 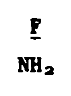
de 0,55, 0,5 et 0,48.

**TABLEAU 1**

| Résine | Résine urée-formol de référence | Exemple 1 |
|---|---|---|
| F/NH₂ | 0,535 | |
| viscosité (Pa.s) | 0,74 | |
| pH | 8 | |
| extrait sec | 66,64 | |
| Mélange collant temps de cuisson (minutes) | 4 | 4 |
| viscosité à 20°C m Pa.s | 70 | 80 |
| durée de pulvérisation (secondes) | 90 | 130 |
| temps de malaxage (secondes) | 420 | 150 |

| Panneaux | | |
|---|---|---|
| épaisseur sortie presse | 16,6 mm | 16,6 mm |
| traction à sec/N.mm2 | 0,65 | 0,8 |
| masse volumique (kg/m3) | 680 | 680 |
| gonflement V20 | 8,3 | 7,9 |
| humidité panneaux | 7,7 | 7,5 |
| formol perforateur (mg pour 100 g panneau sec) | 9,7 | 9,6 |

Les mesures ont été réalisées selon les normes suivantes :

| | |
|---|---|
| - Teneur en formol (perforateur) | Norme EN 120 |
| - Epaisseur, masse volumique | Norme NFB 51222 |
| - Traction V20 | Norme NFB 51250 |
| - Gonflement % | Norme NFB 51252 |

Dans chaque essai on prépare la résine urée-formol de la façon suivante :

### Essai 1

A 1600 parties d'une solution aqueuse de formol et d'urée (formol : 24,5 moles ; urée : 4,93 moles), 150 parties de ureïdo - 2 diamino -4,6 triazine - 1, 3, 5, 325 parties d'urée et 216 parties d'eau sont ajoutées. Le mélange dont le pH a été ajusté à 7, est maintenu à reflux pendant 20 minutes. La condensation est ensuite réalisée pour une valeur de pH = 5. De l'urée, 640 parties est ensuite ajoutée à la résine. La résine obtenue présente les caractéristiques indiquées dans le tableau 2.

### Essai 2

Dans cet essai on met en oeuvre 1600 parties d'une solution aqueuse formol-urée, 159,6 parties de ureïdo - 2 diamino - 4,6 triazine - 1, 3, 5, puis 320 parties d'urée et 218 parties d'eau. En fin de synthèse on ajoute 773 parties d'urée. les propriétés de la résine obtenue sont indiquées au tableau 2.

### Essai 3

Pour cet essai on utilise 1600 parties d'une solution aqueuse formol-urée, 164 parties de ureïdo - 2 diamino - 4,6 triazine - 1, 3, 5, 317,7 parties d'urée et 219 parties d'eau. En fin de synthèse on ajoute 835 parties d'eau. Les caractéristiques de la résine sont indiquées dans le tableau 2.

**TABLEAU 2**

| Essai | 1 | 2 | 3 |
|---|---|---|---|
| F/NH₂ final | 0,55 | 0,5 | 0,48 |
| viscosité à 20°C (m Pa . s) | 360 | 300 | 240 |
| temps de gel à 80°C (s) | 300 | 305 | 360 |
| tolérance à l'eau à 20°C | 1,75/l | 1,5/l | 1,5/l |
| extrait sec % | 65,4 | 64 | 64 |

Les mélanges ainsi obtenues sont utilisés pour fabriquer des panneaux.Les caractéristiques de ces panneaux sont résumées dans le tableau 3.

Les conditions de fabrication des panneaux sont les suivantes :
- Epaisseur des panneaux : 17 mm
- Matériau : melange de copeaux de bois
- Durcisseur : 1,5 % de chlorure d'ammonium sec par rapport à la résine sèche
- Durée de pressage : 4 minutes
- Température de pressage : 180°C
- Pression de pressage : 20 bars

**TABLEAU 3**

| Résines | Témoin | Essai 1 | Essai 2 | Essai 3 |
|---|---|---|---|---|
| F/NH₂ | 0,535 | 0,55 | 0,50 | 0,48 |
| viscosité (mPa.s) | 350 | 360 | 300 | 240 |
| pH | 9,2 | 9,2 | 9,2 | 9,2 |
| extrait sec | 65,1 | 65,4 | 64 | 64,2 |
| traction N/mm2 pour masse volumique de 650 kg/m3 | 0,64 | 0,66 | 0,61 | 0,44 |
| gonflement eau froide 24 heures % | 14 | 11,4 | 13,8 | 15 |
| formol perforateur mg/100 g | 9,5 | 6,3 | 4,6 | 3,4 |

### Exemple 3

A 350 parties d'une solution aqueuse de formol et d'urée (urée : 1, 18 moles ; formol : 5,7 moles), 20 parties de mélamine, 77 parties d'urée et 67 parties d'eau sont ajoutées. Le mélange, dont le pH à été amené à 8, est maintenu à reflux pendant 20 minutes. La condensation est ensuite réalisée à une valeur de pH = 5. Lorsque la réaction de condensation est finie, la valeur du pH est ajustée à 7 et un solution contenant 95 parties de formol, 39,7 parties d'urée, 20 parties de ureïdo - 2 diamino 4,6 triazine -1, 3, 5 et 80 parties d'eau, préalablement homogénisée à 80°C et à ph = 8,5 , sont ajoutées. L'addition terminée, 270 parties d'urée sont ajoutées à la résine. La résine obtenue présente les caractéristiques suivantes :

| | |
|---|---|
| - extrait sec | 65 % |
| - viscosité à 20°C | 1,80 m Pa.s |
| - temps de gel à 80°C | 205 s |
| - tolérance à l'eau | 2,2/l |

Les caractéristiques des panneaux obtenus sont résumées dans le tableau 4.

**TABLEAU 4**

| Résines | Résine de comparaison | Résine exemple 3 |
|---|---|---|
| F/NH₂ | 0,535 | 0,55 |
| viscosité m Pa.s | 360 | 180 |
| extrait sec | 64,4 | 65,2 |

| Mélange collant | | |
|---|---|---|
| viscosité m Pa.s | 60 | 52 |
| T.G. (100°C) | 95 | 170 |

| Panneaux | | |
|---|---|---|
| gonflement eau froide 24 heures (%) | 14,25 | 9,5 |
| absorption eau froide 24 heures % pour masse volumique 650 kg/m3 | 50 | 34 |
| traction N/mm2 pour une masse volumique de 650 (kg/m3) | 0,6 | 0,68 |
| formol-perforateur mg pour 100 g | 8,7 | 8,8 |

### Exemple 4

On ajoute 30 parties mélamine, 61 parties d'urée et 630 parties d'eau à 318 parties d'une solution aqueuse de formol et d'urée (urée : 1,07 moles, formol : 5,18 moles). Le mélange dont le pH a été ajusté à 8 est maintenu, à reflux pendant 20 minutes. La condensation est ensuite réalisée à une valeur de pH de 5. Lorsque la réaction de condensation est finie, la valeur du pH est amenée à 7 et une solution contenant 103 parties de formol, 43,1 parties d'urée, 30 parties de ureïdo - 2 diamino - 4,6 triazine - 1, 3, 5 et 90 parties d'eau, préalablement homogéneïsée à 80°C et pH 8,5 est ajoutée. On ajoute ensuite 276,5 parties d'urée à la résine. On fabrique des panneaux avec la résine obtenue.

Les caractéristiques des panneaux obtenus sont résumées dans le tableau 5 où apparaissent également, à titre de comparaison, les résultats obtenus avec une résine témoin urée-formol de même rapport F/NH₂ (résine A) et une autre résine témoin (résine B) de même rapport F/NH₂ et contenant 6 % de mélamine.

**TABLEAU 5**

| Résines | Résine de comparaison A | Résine de comparaison B | Résine Exemple 4 |
|---|---|---|---|
| traction à sec N/mm2 pour une densité de 650 kg/m3 | 0,7 | 0,76 | 0,77 |
| gonflement V20 (%) | 14,1 | 12,2 | 11,7 |
| absorption (%) | 47 | 44 | 37 |
| formol perforateur mg/100 g | 8,7 | 10,4 | 7,4 |

### Exemple 5

Cet exemple est destiné à montrer la synergie entre le mélamine et l'uréïdo - 2 - diamino - 4,6 triazine - 1,3,5

### I) Préparation des résines suivantes :

### 1) Résine C contenant 4 % d'uréïdo - 2 diamino - 4,6 triazine - 1, 3, 5.

On ajoute 151 parties d'urée et 109 parties d'eau à 564,3 parties d'une solution aqueuse de formol et d'urée (1,9 moles d'urée et 9,3 moles de formol). Le mélange dont le pH a été ajusté à 7 est maintenu à reflux pendant 20 minutes. La condensation est ensuite réalisée à une valeur de pH de 5. Lorsque la réaction de condensation est finie, la valeur du pH est amenée à 7 et une solution contenant 89 parties d'urée, 217,5 parties de formol, 134 parties d'eau et 80 parties d'uréïdo - 2 - diamino - 4,6 - triazine - 1, 3, 5, préalablement homogénéïsée à 80°C à pH 8,5 est ajoutée. Après élimination de 36 parties d'eau par distillation et refroidissement 626 parties d'urée sont ajoutées.

Les caractéristiques de la résine sont les suivantes :
Extrait sec : 64,56 %
Viscosité à 20°C : 730 m Pa.s
Temps de gel à 80° C mesuré au tube = 660 s (pateux)
F/NH₂ = 0,485

### 2) Résine contenant 2% d'uréïdo - 2 - diamino - 4,6 triazine - 1, 3, 5 et 2 % de mélamine (résine D).

On ajoute 145 parties d'urée, 130,7 parties d'eau et 40 parties de mélamine à 61,7 parties d'une solution aqueuse de formol et d'urée (2,18 moles d'urée et 10,65 moles de formol). Le mélange dont le pH à été ajusté à 8 est maintenu à reflux pendant 20 minutes. La condensation est ensuite réalisée à une valeur de pH de 5. Lorsque la réaction de condensation est finie, la valeur du pH est amenée à 7 et une solution contenant 73,2 parties d'urée, 179 parties de formol 110 parties d'eau et 40 parties d'uréïdo - 2 - diamino - 4,6 - triazine - 1, 3, 5, préalablement homogénéisée à 80°C à pH = 8,5 est ajoutée. Après élimination de 35 parties d'eau par distillation et refroidissement, 629 parties d'urée sont ajoutées.

Les caractéristiques de la résine sont les suivantes :
Extrait sec = 64,07 %
Viscosité à 20°C : 120 mPa.s
Temps de gel à 80°C mesure au tube = à 720 sec. (pateux)

### 3) Résine contenant 4 % d'uréïdo - 2 - diamino - 4,6 triazine - 1, 3, 5 et 2 % de mélamine. (résine E)

On ajoute 121,45 parties d'urée, 113 parties d'eau et 40 parties de mélamine à 558,8 parties d'une solution aqueuse de formol et d'urée (1,88 moles d'urée et 276 moles de formol). Le mélange dont le pH a été ajusté à 8 est maintenu à reflux pendant 20 minutes. La condensation est ensuite réalisée à une valeur de pH de 5. Lorsque la réaction de condensation est finie, la valeur du pH est amenée à 7 et une solution contenant 88,52 parties d'urée, 216,4 parties de formol, 80 parties d'uréïdo - 2 diamino - 4,6 triazine 1, 3, 5 et 133,2 parties d'eau, préalablement homogénéisée à 80°C à pH = 8,5 est ajoutée. Après élimination de 39 parties d'eau par distillation et refroidissement, 621 parties d'urée sont ajoutées.

Les caractéristiques de la résine sont les suivantes :
Extrait sec = 64,4 %
Viscosité à 20°C = 460 mPa.O
Temps de gel à 80°C mesuré au tube = 12.00 sec (pateux)

### II Application à la préparation de panneaux de particules

Les résines précedemment décrites ont été utilisées dans la préparation de panneaux de particules. Les conditions de mise en oeuvre sont les suivantes :
- Presse :
   Pression 30 daN/cm2
   Température 185°C
   Montée en pression 30 sec
   Temps à pression constante = 12 sec/mm
- Prépresse :
   Pression 5 daN/cm2
   Temps 1 mn
- Panneaux conformation monocouche
- Copeaux pin des Landes (mélange "intérieur")
- Encollage 7 % résine sec/bois sec
- Les mélanges collants sont les suivants : mélange collant 52 %
   Paraffine (Mobilier 72)
   0,5 % sec/copeaux secs
   Catalyseur NH₄ Cl : 1,5 % sec/résine sèche

### III Résultats

Les panneaux ainsi préparés ont été contrôlés, les résultas sont décrits dans le tableau N° 6 où ils sont comparés avec ceux obtenus avec une résine urée-formol (notée F) de même rapport F/NH₂ contenant 6% de mélamine.

| RESINE | C | D | E | F |
|---|---|---|---|---|
| taux de uréïdo -2- diamino 4, 6 triazine 1, 3, 5 | 4 | 2 | 4 | 0 |
| taux de MELAMINE | 0 | 2 | 2 | 6 |
| F/NH₂ | 0,485 | 0,485 | 0,485 | 0,485 |
| Epaisseur sortie presse (mm) | 17,25 | 17,15 | 17,1 | 17,15 |
| Formol perforateur acétylacétone mg/100 g | 7,5 | 7,4 | 7 | 7 |
| Gonflement | 15,8 | 13,2 | 12,7 | 12,6 |
| Absorption % pour masse volumique de 660 kg/m3 | 56 | 48,9 | 48 | 47,8 |
| Traction N/mm2 pour masse volumique de 660 kg/m3 | 0,56 | 0,63 | 0,61 | 0,58 |
| Flexion N/mm2 pour masse volumique de 660 kg/m3 | 11,7 | 12,3 | 13,2 | 12,5 |

## Revendications

1. Procédé de préparation de panneaux de particules avec une résine aminoplaste à titre d'agent liant, selon lequel les panneaux sont fabriqués par pressage à chaud d'une masse de copeaux de bois ou d'une autre matière cellulosique en mélange avec des liants, caractérisé en ce que la résine aminoplaste est additionnée d'uréido-2-diamino 4,6 triazine 1,3,5 et éventuellement de mélamine, ladite triazine étant ajoutée à raison de 0,1 à 10 % en poids par rapport au poids de la solution de résine et la quantité de mélamine étant au plus égale à 10 % en poids par rapport au poids de la solution de résine, les quantités de réactifs mises en oeuvre pour obtenir les résines aminoplastes ayant un rapport molaire 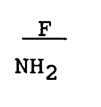 compris entre 0,42 à 1.

## Claims

1. Process for the preparation of particle boards with an aminoplastic resin as binding agent, according to which the boards are produced by hot pressing a mass of wood chips or other cellulose material mixed with binders, characterized in that 2-ureido-4,6-diamino-1,3,5-triazine and optionally melamine are added to the aminoplastic resin, the said triazine being added in proportions of 0.1 to 10 % by weight relative to the weight of the resin solution and the quantity of melamine being up to a maximum of 10 % by weight relative to the weight of the resin solution, the quantities of reagents used to obtain the aminoplastic resins having a F/NH₂ molar ratio between 0.42 and 1.

## Patentansprüche

1. Verfahren zur Herstellung von Spanplatten mit einem Aminoplastharz als Bindemittel, wonach die Platten durch Heißpressen einer Masse aus Spänen aus Holz oder einem anderen Cellulosematerial in Mischung mit Bindemitteln hergestellt werden, dadurch gekennzeichnet, daß dem Aminoplastharz Ureido-2-diamino-4,6-triazin-1,3,5 und gegebenenfalls Melamin zugesetzt wird, wobei das genannte Triazin in einer Menge von 0,1 bis 10 Gew.-%, bezogen auf das Gewicht der Harzlösung, zugesetzt wird und die Menge an Melamin höchstens 10 Gew.-%, bezogen auf das Gewicht der Harzlösung, beträgt, und wobei die Mengen der zur Herstellung der Aminoplastharze eingesetzten Reaktionsteilnehmer ein Molverhältnis F/NH₂ von 0,42 bis 1 aufweisen.
